Europäisches Patentamt

European Patent Office

Office européen des brevets

(19)

(11) Publication number: **0 115 137**
**B1**

## EUROPEAN PATENT SPECIFICATION

(45) Date of publication of patent specification: **22.10.86**

(21) Application number: **83307494.1**

(22) Date of filing: **08.12.83**

(51) Int. Cl.⁴: **C 04 B 40/00, C 04 B 24/26,
C 04 B 24/38**

(54) Stable cementitious composition.

(30) Priority: **31.12.82 GB 8237013**

(43) Date of publication of application:
**08.08.84 Bulletin 84/32**

(45) Publication of the grant of the patent:
**22.10.86 Bulletin 86/43**

(84) Designated Contracting States:
**AT BE CH DE FR GB IT LI LU NL SE**

(56) References cited:
**EP-A-0 055 035
DE-A-2 417 086
DE-A-2 720 037
DE-A-2 923 082
DE-B-2 326 647
DE-C- 873 066
US-A-3 813 460**

(73) Proprietor: **IMPERIAL CHEMICAL INDUSTRIES
PLC
Imperial Chemical House Millbank
London SW1P 3JF (GB)**

(72) Inventor: **Kendall, Kevin
10 Claverton Close
Runcorn Cheshire (GB)**

(74) Representative: **Walmsley, David Arthur
Gregson et al
Imperial Chemical Industries PLC Legal
department: Patents PO Box 6 Bessemer Road
Welwyn Garden City Hertfordshire AL7 1HD (GB)**

Courier Press, Leamington Spa, England.

# Description

This invention relates to a stable cementitious composition, that is to a cementitious composition in which the setting reaction has been delayed and which remains mouldable for a prolonged period of time.

The effect of subjecting a cementitious composition, that is a mixture of a hydraulic cement and water, to freezing followed by thawing has been extensively studied. It is generally recognised that freezing of a cementitious composition shortly after preparation of the composition, or freezing of the composition after the setting reaction has proceeded for only a short period of time, results in irreversible damage. In particular, when such a cementitious composition which has been frozen is subsequently thawed and allowed to set the strength of the resultant cement product is not as great as that of a cement product produced from an identical cementitious composition which has not been subjected to freezing and thawing.

The setting reaction of a cementitious composition starts immediately after mixing of the hydraulic cement and water, although it can be delayed by use of chemical additives. Such additives are generally used to delay the setting reaction for about 24 hours. If such additives are used to achieve a longer period of delay the setting reaction becomes difficult to control. The composition must be used shortly after mixing and certainly before the setting reaction has proceeded to the extent that the composition is no longer mouldable and capable of being shaped. For this reason cementitious compositions are mixed and used, that is shaped and moulded, on the same site, or are at most transported only a short distance after mixing and before use. The mixing of a cementitious composition on one site followed by prolonged storage or long distance transportation to another site is generally not practised.

It would be advantageous if cementitious compositions comprising a mixture of a hydraulic cement and water could be mixed and then stored for a prolonged period of time before use, so as to permit storage and long distance transportation of the composition from one site to another, and thereafter achieve a controlled setting of the composition. The ability to store such cementitious compositions for prolonged periods of time would also permit such compositions to be mixed under controlled conditions on a single site and distributed to several sites for use.

The present invention relates to a cementitious composition which can be so stored for a prolonged period of time before use and which can thereafter be set in a controlled manner.

According to the present invention there is provided a homogeneous cementitious composition comprising
(a) at least one hydraulic cement,
(b) water in a proportion of not more than 25% by weight of the hydraulic cement in the composition, and
(c) at least one organic polymeric material which is water-soluble or water-dispersible, which is capable of aiding the processing of the composition, and which is present in a proportion of 2% to 15% by weight of the hydraulic cement in the composition,
characterised in that the temperature of the composition is less than 0°C.

We have found that provided the cementitious composition contains a proportion of water below 25% by weight and a proportion of water-soluble or water-dispersible polymer in the defined proportion it may be "frozen" at a temperature below 0°C for a prolonged period of time, and that when subsequently "thawed" to ambient temperature it may be moulded and shaped, without further mixing, and set to a cement product the strength of which is substantially the same as that of a product made from an identical cementitious composition which has not been "frozen".

By the term "hydraulic cement" we mean any material which sets and hardens by the addition of water, and which thus sets and hardens in the presence of water. The hydraulic cement may be a silicate (siliceous) cement, for example a calcium silicate cement, e.g. Portland cement. If desired it may be an aluminate (aluminous) cement, for example a calcium aluminate cement, or a calcium sulphate hemihydrate ("Plaster of Paris") cement. Mixtures of two or more different hydraulic cements may be used if desired.

The proportion of water in the cementitious composition of the invention has a bearing on the properties of the cementitious product produced therefrom, and for high strength products, particularly high flexural strength products to be produced it is desirable to use in the composition the minimum amount of water which enables a plastic dough-like shapeable cementitious composition to be achieved. The proportion of water in the cementitious composition should not be more than 25% by weight of the hydraulic cement in the composition, and it is preferably not more than 18% and more preferably not more than 12% by weight of the hydraulic cement in the composition, although the amount of water should not be so low that a plastic dough-like shapeable cementitious composition cannot be formed. In general the composition will comprise at least 7% by weight of water.

The nature of the organic polymeric material which is water-soluble or water-dispersible is not critical provided it is capable of aiding in the processing of the cementitious composition. For example, the organic polymeric material may be
(i) a cellulose ether, for example hydroxypropyl methyl cellulose,
(ii) an amide-substituted polymer, for example a polymer or copolymer of acrylamide,
(iii) a polyalkylene oxide derivatives which may be for example a polyalkylene oxide (alternatively described as a polyalkylene glycol) for example polyalkylene glycols of molecular weight above about 10,000, or polyalkyoxy derivatives of alcohols, phenols or the like, or (iv) a carboxylic acid group-containing polymer, e.g. polyacrylic acid.

Another type of organic polymeric material which may form a component of the cementitious composition is a partially hydrolysed vinyl ester polymer or copolymer, for example a partially hydrolysed vinyl acetate polymer or copolymer as disclosed in European Patent Publication No. 0055035. It is preferred that the degree of hydrolysis of the vinyl ester (co)polymer be at least 50%, and more preferably in the range 70% to 90%, that is it is preferred that at least 50%, more preferably 70% to 90% of the ester units in the (co)polymer are hydrolysed to the alcohol form.

It is essential, in order that the act of "freezing" should have little or no deleterious effect, that the cementitious composition comprises at least 2% of organic polymeric material by weight of the hydraulic cement in the composition. On the other hand, as such materials are generally expensive and also as they are generally flammable, it is preferred to use as small amount of such material as possible. It is preferred that the cementitious composition comprises not more than 10% of organic polymeric material by weight of the hydraulic cement.

The organic polymeric material in the cementitious composition of the invention should be water-soluble or water-dispersible. Whilst it may be difficult to judge whether or not an organic polymeric material is truly water-soluble or is merely partially solvated by water and is capable of being well dispersed in water, organic polymeric material present in the cementitious composition of the invention should be sufficiently soluble in or be sufficiently well dispersed in the water in the composition to be effective as a rheological aid, that is it should be capable of aiding in the processing of the cementitious composition. Thus, the organic polymeric material should be sufficiently water-soluble or water-dispersible and be present in the cementitious composition of the invention in a proportion such that the composition is capable of being formed into a plastic dough when compounded in conventional mixing equipment, for example when compounded in a Brabender Plastograph, when extruded, or when compounded on a twin roll mill. For example, if the organic polymeric material is sufficiently water-soluble or water-dispersible the composition will be sufficiently cohesive that it may be formed into a continuous, cohesive, plastic sheet on a twin roll mill. The sheet is preferably sufficiently cohesive that it may be removed from the rolls in lengths of at least 30 cm. If the organic polymeric material is not sufficiently water-soluble or water-dispersible a continuous, cohesive, plastic sheet will not be formed. Indeed the mixture may be friable. It is preferred to use a water-soluble organic polymeric material as such materials are generally particularly effective as rheological aids.

The components of the cementitious composition of the invention should be thoroughly mixed in order to form a homogeneous composition. The formation of a homogeneous composition is assisted by the application of a high shearing action to the composition. It is also advantageous to remove air from the composition by mixing the composition under an applied vacuum. The high shearing action may be achieved by compounding the composition in a planetary mixer and/or on a twin roll mill, the composition being passed repeatedly through the nip between the rolls of the mill. A planetary mixer may be used to effect initial mixing of the composition and the composition may subsequently be mixed and sheared on a twin-roll mill.

In order to delay the setting reaction for a prolonged period of time the homogeneous cementitious composition should be maintained at a temperature of less than 0°C. In general, there is no particular advantage to be gained by use of very low temperatures, and it is preferred, for economic reasons, that the composition be maintained at a temperature of not less than −20°C, more preferably not less than −10°C.

However, the composition may be maintained at a temperature substantially below −20°C, and this may even be desired in some circumstances. For example, when the organic polymeric material is a partially hydrolysed vinyl ester polymer or copolymer it may be desirable to maintain the composition at a temperature substantially below −20°C in order to inhibit hydrolysis of the polymeric material as hydrolysis may result in gelation of the polymeric material with a resultant adverse effect on the mouldability of the cementitious composition when the composition is returned to ambient temperature.

By maintaining the cementitious composition at a temperature of less than 0°C the setting reaction of the composition may be delayed for a period of weeks or even several months.

It is preferred, when the comentitious composition is at a temperature below 0°C, that the composition be in a sealed container otherwise there may be some tendency for the water in the composition to be lost even at such low temperature.

When it is desired to use the cementitious composition the composition is "thawed" by allowing it to return to ambient temperature. The composition may then be shaped and set.

The cementitious composition of the invention may be shaped, for example, by extrusion or by compressing in a mould. Thus, the composition may be extruded through a suitably shaped orifice into the form of a rod or tube, or it may be extruded into the form of a sheet. However, the properties of the cementitious product produced from the composition are not dependent on the use of high pressure in the shaping of the composition, use of a pressure of 1 to 5 MPa generally being sufficient.

The setting of the cementitious composition of the invention may be achieved in conventional manner, for example, by maintaining the composition in a humid atmosphere, e.g. at a relative humidity at or near 100% for a period of 0.5 to 30 days, or setting may be achieved merely by allowing the composition to stand at ambient temperature and relative humidity. The time required to achieve setting is dependent at least in part on the temperature used, the higher the temperature the shorter the setting time required. Although setting may be effected at ambient temperature the time required may conveniently be reduced by using a setting temperature in the range, for example, 40°C to 120°C.

The cementitious composition may be set at elevated temperature and under a moderate applied pressure, e.g. of up to 5 MPa. It is preferred to set the composition under such an applied moderate pressure, at least in the initial stage of the setting reaction.

In order that the cement product should possess particularly high flexural strength it is preferred that not more than 2%, and more preferably not more than 0.5%, of the total volume of the cementitious product comprises pores having a maximum dimension exceeding 100 μm, preferably 50 μm, and more preferably 15 μm, as measured by the method of quantitative microscopy described in the published European Patent Publication No. 0 021 682.

The cementitious composition of the invention, and the cement product produced therefrom, may contain particulate aggregate, e.g. sand, silicon carbide, alumina. The aggregate is preferably of small particle size, e.g. less than 200 μm. In this case the cementitious composition of the invention should contain at most 25% of water by weight of the hydraulic cement and particulate aggregate in the composition, and 2 to 15% of organic polymeric material by weight of the hydraulic cement and particulate aggregate in the composition.

The cementitious composition may also contain conventional retarders or accelerators in order to further control the rate of setting of the composition.

The invention is illustrated by the following examples in which all parts are expressed as parts by weight.

Example 1

A composition of 100 parts of white Portland cement (Snowcrete), 14 parts of water, and 4 parts of hydroxypropylmethyl cellulose (Celacol HPM 15000 DS) was mixed into the form of a crumbly mass in a planetary mixer, and the mass was then charged to a twin-roll mill. The mass was formed into a sheet on the mill and was thoroughly mixed by repeatedly passing the sheet through the nip between the rolls of the mill. Thereafter the sheet was divided into three equally sized portions two of the portions were sealed into separate polyethylene bags and placed in a freezer at a temperature of −20°C, and a third portion was allowed to stand at room temperature for 7 days for the cement to set to a hardened cement product.

After one week one of the sheets was removed from the freezer, and after allowing the sheet to attain the ambient room temperature it was found to be pliable and mouldable. The sheet was then allowed to stand at room temperature for 7 days for the cement to set to a hardened cement product. The flexural strength of the cement product was measured by the three-point bend test and was found to be 32±2 MPa. The above procedure was repeated with a second sheet removed from the freezer after 60 days. After attaining ambient room temperature the sheet was found to be pliable and mouldable and the cement product produced from the sheet had a flexural strength of 32±2 MPa.

By way of comparison the flexural strength of the cement product produced from the sheet which had not been subjected to freezing was 29±1 MPa.

Example 2

The procedure of Example 1 was repeated except that a calcium aluminate cement (Secar 71) was used in place of the white Portland cement and sheet samples were placed in a freezer for 7 days and 200 days.

The flexural strengths of the cement products produced from the sheets were as follows:

| Time at −20°C days | Flexural strength MPa |
|---|---|
| 7 | 35 ±3 |
| 200 | 32 ±2 |
| 0 (comparison) | 31.4±4 |

Example 3

The procedure of Example 1 was repeated except that calcium sulphate hemihydrate cement (Crystacal R) was used in place of the white Portland cement, 15 parts of water were used, and in addition the composition contained 1 part of polyacrylic acid solution (Versicol E5 Allied Colloids).

The flexural strengths of the cement products produced from the sheets were as follows:

| Time at −20°C days | Flexural strength MPa |
|---|---|
| 70 | 21±2 |
| 0 (comparison) | 21±2 |

Example 4

The procedure of Example 1 was repeated except that a calcium aluminate cement (Secar 71) was used in place of the white Portland cement, and setting of the cement sheet was carried out by heating at 50°C for 30 minutes under an applied pressure of 2 MPa.

The flexural strengths of the cement products produced from the sheets were as follows:

| Time at −20°C days | Flexural strength MPa |
|---|---|
| 30 | 55 |
| 0 (comparison) | 55 |

Comparative Example

200 parts of a calcium aluminate cement (Secar 71) and 70 parts of water were thoroughly mixed and charged to a polyethylene bag which was laid on a flat surface so as to form the cement composition into a sheet. The sheet was allowed to stand at room temperature for 4 days to set to a hardened cement product.

The flexural strength of the cement product was 8±1.2 MPa.

The above procedure was repeated except that after charging the cement composition to the bag the sheet was placed in a freezer at a temperature of −20°C for 1 hour. Thereafter, the sheet was removed from the freezer, and allowed to attain ambient room temperature. Large ice crystals were observed to be present in the sheet. The sheet was then allowed to stand at room temperature for 4 days to set to a hardened cement product.

The resultant product was fragile and tended to break in several places when it was cut with a diamond saw in order to produce samples for a three-point bend test.

The flexural strength of the product was 4.4±0.7 MPa.

Thus, where the cementitious composition does not contain an organic polymeric material freezing of the composition has a substantial deleterious effect on the strength of a cement product produced from the composition.

Examples 5 to 9

The procedure of Example 1 was followed to produce a sheet except that a composition of 100 parts of calcium aluminate cement (Secar 71, Lafarge), 11 parts of water, 0.5 parts of glycerol and 7 parts of a 80% hydrolysed polyvinyl acetate (Gohsenol KH 17S, Nippon Gohsei) was used. The sheet was divided into seven separate samples and each sample was sealed into a separate polyethylene bag following the procedure of Example 1.

Example 5

The first sample was placed in a freezer at a temperature of −20°C. After 1 hour the sample was removed from the freezer, and after removal from the polyethylene bag and allowing the sheet to attain ambient temperature, it was found to be mouldable. The sheet was allowed to stand at ambient temperature for 24 hours to cure and then it was heated at 80°C for 1 hour. The flexural strength of the sheet was 70±5 MPa.

Example 6

The second sample was placed in a freezer at −70°C for 12 hours. After removal from the freezer it was allowed to attain ambient temperature and the still mouldable sheet was cured and dried following the procedure of Example 5.

The flexural strength of the sheet was 72±MPa.

Example 7

The procedure of Example 6 was followed with the third sample except that, after attaining ambient temperature, the sheet was pressed at 5 MPa for 24 hours and then dried by heating at 80°C for 1 hour.

The flexural strength of the sheet was 140±5 MPa.

Example 8

The fourth sample was stored at a temperature of −196°C for 4 days. After allowing the sample to attain ambient temperature the still mouldable sheet was cured and dried following the procedure of Example 5. The flexural strength of the sheet was 76±4 MPa.

Example 9

The procedure of Example 8 was followed with the fifth sample except that, after attaining ambient temperature, the sheet was pressed at 5 MPa for 24 hours and then dried by heating at 80°C for 1 hour. The flexural strength of the sheet was 142±5 MPa.

In two comparative examples the sixth and seventh samples were immediately after production, respectively cured and dried following the procedure of Example 5 and pressed and dried following the procedure of Example 7. The flexural strengths of the sheets were respectively 75±5 MPa and 147±5 MPa.

Examples 10 and 11

The procedure of Example 1 was followed to produce a sheet except that a composition of 100 parts of calcium aluminate cement (Secar 71, Lafarge), 15 parts of water, and 3 parts of polyacrylamide (Versicol WN 23, Allied Colloids) was used. The sheet was pressed at 3 MPa for 20 seconds and divided into three separate samples, two of which were sealed into polyethylene bags.

Example 10

The first sample was stored in a freezer at −20°C for 7 days. After removal from the freezer the sample was allowed to attain ambient temperature, removed from the bag, and the still mouldable sheet was cured by allowing to stand at ambient temperature for 5 days and then dried by heating at 80°C for 1 hour. The flexural strength of the sheet was 42±MPa.

Example 11

The procedure of Example 10 was repeated with the second sample except that the sample was stored for 3 days at −70°C. The flexural strength of the sheet was 40±5 MPa.

In a comparative example the third sample was cured and dried following the procedure of Example 10 immediately after the sheet had been pressed for 20 seconds at 3 MPa. The flexural strength of the sheet was 47±2 MPa.

**Examples 12 to 13**

The procedure of Examples 10 and 11 and of the above comparative example were repeated except that the polyacrylamide was replaced by polyethylene oxide (Polyox WSRN-750, BDH). The flexural strengths of the sheets were as follows.

Example 12 18±2 MPa
Example 13 19±1 MPa
Comparative Example 19±3 MPa

**Example 14**

A composition of 100 parts of calcium aluminate cement (Secar 71, Lafarge) and 2.5 parts of hydroxypropyl methyl cellulose (DS 15000, Courtaulds Acetate) was dry-blended in an extruder-mixer, the air was evacuated from the mixture, and 20 parts of water were added. After a further 10 minutes mixing a sheet was extruded which was divided into two samples.

The first sample was sealed in a polyethylene bag and stored in a freezer at −20°C for 7 days. After removal from the freezer the sheet was allowed to attain ambient temperature.

The sheet was removed from the bag and was found to be still mouldable.

The sheet was cured by allowing to stand at ambient temperature for 5 days and was then dried at 80°C for 1 hour.

The flexural strength of the sheet was 48±7 MPa.

By way of comparison the second sample, immediately after extrusion, was cured and dried following the above procedure. The flexural strength of the sheet was 42±5 MPa.

**Examples 15 and 16**

The procedure of Example 2 was repeated except that separate samples of sheet were sealed in polyethylene bags and stored in a freezer at −10°C for 7 days and at −5°C for 7 days respectively.

The sheets removed from the freezer were found to be mouldable at ambient temperature respectively.

The sheets were then allowed to stand at ambient temperature for 7 days. The flexural strengths of the sheets were respectively 30±2 MPa and 31±3 MPa.

**Example 17**

The procedure of Example 1 was repeated except that a composition of 100 parts of calcium aluminate cement (Secar 71), 25 parts of water, and 4 parts of hydroxypropyl methyl cellulose (Celacol HPM 15000 DS) was used, and setting of the composition to a hardened cement product' was effected by allowing the composition to stand at room temperature for 7 days and thereafter drying at 80°C for 3 hours.

| Time at −20°C days | Flexural strength MPa |
|---|---|
| 7 | 25 |
| 0 (comparison) | 20 |

**Example 18**

The procedure of Example 1 was repeated except that a composition of 20 parts of calcium aluminate cement (Secar 71), 10 parts of water, 2 parts of hydroxypropyl methyl cellulose (Celacol 15000 DS) and 80 parts of sand (Congleton 95, 140 μm) was used, the sheet was pressed at 5 MPa for 30 seconds prior to placing in a freezer, and setting of the composition to a hardened cement product was effected by allowing the composition to stand at room temperature for 7 days and thereafter drying at 80°C for 3 hours.

| Time at −20°C days | Flexural strength MPa |
|---|---|
| 7 | 25 |
| 0 (comparison) | 21 |

**Claims**

1. A homogeneous cementitious composition comprising
(a) at least one hydraulic cement,
(b) water in a proportion of not more than 25% by weight of the hydraulic cement in the composition, and
(c) at least one organic polymeric material which is water-soluble or water-dispersible, which is capable of aiding the processing of the composition, and which is present in a proportion of 2% to 15% by weight of the hydraulic cement in the composition,
characterised in that the temperature of the composition is less than 0°C.

2. A cementitious composition as claimed in Claim 1 characterised in that the hydraulic cement is selected from a calcium silicate cement, a calcium aluminate cement, and calcium sulphate hemihydrate cement.

3. A cementitious composition as claimed in Claim 1 or Claim 2 characterised in that the composition comprises not more than 18% of water by weight of the hydraulic cement in the composition.

4. A cementitious composition as claimed in any one of Claims 1 to 3 characterised in that the organic polymeric material is selected from hydroxypropyl methyl cellulose, polyacrylamide, and a partially hydrolysed vinyl ester polymer or copolymer.

5. A cementitious composition as claimed in Claim 4 characterised in that the partially hydrolysed vinyl ester polymer or copolymer is a partially hydrolysed polyvinyl acetate.

6. A cementitious composition as claimed in any one of Claims 1 to 5 characterised in that the composition comprises not more than 10% of organic polymeric material by weight of the hydraulic cement in the composition.

7. A cementitious composition as claimed in any one of Claims 1 to 6 characterised in that the temperature of the composition is in the range 0°C to −20°C.

8. A cementitious composition as claimed in any one of Claims 1 to 7 characterised in that the composition is in a sealed container.

9. A homogeneous cementitious composition comprising

    (a) at least one hydraulic cement and at least one particulate aggregate,

    (b) water in a proportion of not more than 25% by weight of the hydraulic cement and particulate aggregate in the composition, and

    (c) at least one organic polymeric material which is water-soluble or water-dispersible, which is capable of aiding the processing of the composition, and which is present in a proportion of 2% to 15% by weight of the hydraulic cement and particulate aggregate in the composition,

    characterised in that the temperature of the composition is less than 0°C.

## Patentansprüche

1. Homogene Zementzusammensetzung, welche folgendes enthält:

    (a) mindestens einen hydraulischen Zement,

    (b) Wasser in einem Anteil von nicht mehr als 25 Gew.%, bezogen auf den hydraulischen Zement in der Zusammensetzung, und

    (c) mindestens ein organisches polymeres Material, das in Wasser löslich oder dispergierbar ist, die Verarbeitung der Zusammensetzung erleichtern kann und in einem Anteil von 2 bis 15 Gew.%, bezogen auf den hydraulischen Zement in der Zusammensetzung, vorliegt,

    dadurch gekennzeichnet, daß die Temperatur der Zusammensetzung weniger als 0°C beträgt.

2. Zementzusammensetzung nach Anspruch 1, dadurch gekennzeichnet, daß der hydraulische Zement ausgewählt ist aus einem Calciumsilicat-Zement, einem Calciumaluminat-Zement und einem Calciumsulfathalbhydrat-Zement.

3. Zementzusammensetzung nach Anspruch 1 oder 2, dadurch gekennzeichnet, daß die Zusammensetzung nicht mehr als 18 Gew.% Wasser, bezogen auf den hydraulischen Zement in der Zusammensetzung, enthält.

4. Zementzusammensetzung nach einem der Ansprüche 1 bis 3, dadurch gekennzeichnet, daß das organische polymere Material ausgewählt ist aus Hydroxypropylmethylcellulose, Polyacrylamid und einem teilweise hydrolysierten Vinylesterpolymer oder -copolymer.

5. Zementzusammensetzung nach Anspruch 4, dadurch gekennzeichnet, daß das teilweise hydrolysierte Vinylesterpolymer oder -copolymer ein teilweise hydrolysiertes Polyvinylacetat ist.

6. Zementzusammensetzung nach einem der Ansprüche 1 bis 5, dadurch gekennzeichnet, daß die Zusammensetzung nicht mehr als 10 Gew.% organisches polymeres Material, bezogen auf den hydraulischen Zement in der Zusammensetzung, enthält.

7. Zementzusammensetzung nach einem der Ansprüche 1 bis 6, dadurch gekennzeichnet, daß die Temperatur der Zusammensetzung im Bereich von 0 bis −20°C liegt.

8. Zementzusammensetzung nach einem der Ansprüche 1 bis 7, dadurch gekennzeichnet, daß die Zusammensetzung sich in einem geschlossenen Behälter befindet.

9. Homogene Zementzusammensetzung, welche folgendes enthält:

    (a) mindestens einen hydraulischen Zement und mindestens ein teilchenförmiges Aggregat,

    (b) Wasser in einem Anteil von nicht mehr als 25 Gew.%, bezogen auf den hydraulischen Zement und das teilchenförmige Aggregat in der Zusammensetzung, und

    (c) mindestens ein organisches polymeres Material, das in Wasser löslich oder dispergierbar ist, die Verarbeitung der Zusammensetzung erleichtern kann und in einem Anteil von 2 bis 15 Gew.%, bezogen auf den hydraulischen Zement und das teilchenförmige Aggregat in der Zusammensetzung, vorliegt,

    dadurch gekennzeichnet, daß die Temperatur der Zusammensetzung weniger als 0°C beträgt.

## Revendications

1. Composition de ciment homogène comprenant

    (a) au moins un ciment hydraulique,

    (b) de l'eau en une proportion n'excédant pas 25% en poids du ciment hydraulique dans la composition, et

    (c) au moins une matière polymérique organique qui est soluble ou dispersible dans l'eau, qui est capable d'aider au traitement de la composition et qui est présente dans une proportion de 2 à 15% en poids du ciment hydraulique dans la composition,

    caractérisée en ce que la température de la composition est inférieure à 0°C.

2. Composition de ciment suivant la revendication 1, caractérisée en ce que le ciment hydraulique est choisi entre un ciment au silicate de calcium, un ciment à l'aluminate de calcium et un ciment au sulfate de calcium hémihydraté.

3. Composition de ciment suivant la revendication 1 ou la revendication 2, caractérisée en ce qu'elle ne comprend pas plus de 18% d'eau par rapport au poids du ciment hydraulique dans la composition.

4. Composition de ciment suivant l'une quelconque des revendications 1 à 3, caractérisé en ce que la matière polymérique organique est choisie entre l'hydroxypropylméthylcellulose, un polyacrylamide et un polymère ou copolymère d'ester vinylique partiellement hydrolysé.

5. Composition de ciment suivant la revendication 4, caractérisée en ce que le polymère ou copolymère d'ester de vinyle partiellement hydrolysé est un acétate de polyvinyle partiellement hydrolysé.

6. Composition de ciment suivant l'une quelconque des revendications 1 à 5, caractérisée en ce qu'elle ne comprend pas plus de 10% de matière polymérique organique par rapport au poids du ciment hydraulique dans la composition.

7. Composition de ciment suivant l'une quelconque des revendications 1 à 6, caractérisé en ce que la température de la composition se situe dans l'intervalle de 0°C à −20°C.

8. Composition de ciment suivant l'une quelconque des revendications 1 à 7, caractérisée en ce que la composition est contenue dans un récipient clos.

9. Composition de ciment homogène, comprenant

(a) au moins un ciment hydraulique et au moins un agrégat en particules,

(b) de l'eau en une proportion n'excédant pas 25% en poids du ciment hydraulique et de l'agrégat en particules dans la composition, et

(c) au moins une matière polymérique organique qui est soluble ou dispersible dans l'eau, qui est capable d'aider au traitement de la composition et qui est présente en une proportion de 2 à 15% en poids du ciment hydraulique et de l'agrégat en particules dans la composition,

caractérisé en ce que la température de la composition est inférieure à 0°C.